# EUROPEAN PATENT SPECIFICATION

(11) **EP 2 557 385 B1**
(45) Date of publication and mention of the grant of the patent: **08.01.2014**
(21) Application number: 12178072.0
(22) Date of filing: 26.07.2012
(51) Int. Cl.: F28D 20/00, F24J 3/08

(54) **Thermal Energy Stores and Heat Exchange Assemblies Therefor**
Wärmeenergiespeicher und Wärmetauscheranordnungen dafür
Réservoirs de stockage d'énergie thermique et ensembles d'échangeurs de chaleur correspondants

(30) Priority: 10.08.2011 GB 201113752
(43) Date of publication of application: 13.02.2013
(73) Proprietor: Caplin Solar Systems Ltd, Leicester, Leicestershire LE8 9GP (GB)
(72) Inventor: Goddard, Michael Holland, Dr., Leicester, Leicestershire LE8 9GP (GB); Caplin, Stuart Frank, Leicester, Leicestershire LE8 9GF (GB)
(74) Representative: Serjeants LLP

(56) References cited:
- EP-A2- 2 253 920
- WO-A1-2007/097701
- DE-A1- 3 913 429
- DE-A1-102009 013 981
- DE-C1- 19 728 637
- DE-U1- 8 008 592
- DE-U1- 20 115 397
- GB-B- 2 450 755
- US-A1- 2010 059 198
- US-A1- 2010 139 886

## Description

### Technical Field

The present invention relates to thermal energy stores, and in particular to a ground or earth energy store which acts as a thermal mass to accumulate and store heat energy. The present invention also relates to heat exchange assemblies which can be used to supply heat energy into the thermal energy store and extract heat energy from it. The heat energy that is extracted from the thermal energy store can be used to provide space heating or cooling for buildings, optionally by means of a hydronic heating or cooling system.

### Background Art

In December 2006 the UK Government launched the Code for Sustainable Homes (CSH) which required progressive reductions in the environmental impact of new houses. In particular, a timetable of progressively greater targets for the reduction of energy use has been adopted, with an aim of having a 'zero carbon' output by 2016 for private housing and 2013 for public housing. A 'zero carbon' house is one that has 'zero net emissions of carbon dioxide from all energy use within the home'. This means in effect that it must generate more energy over a year than it uses.

The UK Government is currently considering incorporating parts of the Code into the building regulations with an emphasis on progressive increase in energy efficiency and the reduction of carbon dioxide emissions.

The inventors believe that a number of technical problems need to be solved before zero carbon houses can become a practical and economic reality. One of these is that the most demand for heat and electrical energy occurs when the sun is not shining, either at night on a diurnal basis, or in winter on a seasonal basis. There is no readily available means of storing either electricity or heat for when it is most needed.

Ground source heat pumps (GSHPs) can reduce the carbon footprint of a building by lowering its carbon emissions. By extracting useful heat energy from the surrounding ground a conventional GSHP can be used to provide hot water and/or space heating.

GSHPs circulate a fluid (e.g. water or water/glycol mix) around a ground loop of heat collecting coils, typically made of polyethylene (PE) pipe, that is buried in the land surrounding the building. Heat energy from the ground is absorbed by the circulating fluid and is pumped through a heat exchanger in the heat pump to extract low grade heat. A compressor in the heat pump is then used to concentrate the low grade heat into useful heat that can be used to heat domestic hot water and/or provide space heating.

If the area of the land surrounding the building is sufficient then the heat collecting coils can be laid flat or coiled in shallow trenches below the surface. In an alternative arrangement, the heat collecting coils can be lowered into vertical boreholes that are typically about 120 to 150 mm in diameter (depending on the diameter of the PE pipe that will be used) and between 80 and 150 m deep. Once the heat collecting coils have been lowered into the boreholes, the boreholes are filled with suitable filler such as a thermally-enhanced grout. The filler ensures that no voids are left in the boreholes so that good thermal contact is maintained between the heat collecting coils and the surrounding earth or sub-soil. Typically each borehole will include a single ground loop with one side being the supply and the other the return. It will be readily appreciated that GSHPs are not suitable in all circumstances. Drilling the boreholes is expensive and the boreholes must also be spaced apart by a sufficient distance (e.g. about 7.0 m) to prevent the useful heat energy from being exhausted and allow temperature recovery.

Systems using just GSHPs are essentially 'passive' because they rely on the solar energy that is absorbed by the ground during the warmer months. There are also potential problems and costs associated with positioning the heat collecting coils, e.g. there may be insufficient space or the ground might not be suitable for digging a trench or a borehole.

DE 80 08 592U discloses a device for extracting ground heat. An array of borehole units (or pipe loops 1, 2) is connected in parallel to header pipes 6. The borehole units are received in individual boreholes.

US 2010/0059198 A discloses a device for extracting ground heat, whereby the borehole units are connected in series.

### Summary of the Invention

The present invention provides a thermal energy store that is particularly suitable for buildings that are in the process of being constructed ('new builds').

The thermal energy store uses one or more heat exchange assemblies.

The present invention provides an integrally-formed heat exchange assembly comprising: an array of borehole units arranged on a substantially rigid support structure in a pre-determined pattern prior to installation of the heat exchange assembly (e.g. in a corresponding array of vertical boreholes arranged in the same pre-determined pattern), each borehole unit including an open-loop heat transfer pipe having an inlet and an outlet and extending substantially perpendicular to a plane of the heat exchange assembly; wherein the inlet of a first borehole unit in the array defines an inlet of the heat exchange assembly and an outlet of a last borehole unit in the array defines an outlet of the heat exchange assembly; and wherein, prior to installation of the heat exchange assembly, each borehole unit apart from the first borehole unit has its inlet connected to the outlet of a preceding borehole unit in the array by a connecting pipe that lies substantially in the plane of the heat exchange assembly to define an open-loop fluid circuit including each open-loop heat transfer pipe and extending between the inlet and outlet of the heat exchange assembly.

Typically a borehole unit will be connected to a neighbouring or physically adjacent borehole unit in the array.

The individual borehole units can be arranged in any suitable pre-determined pattern (e.g. a rectangular or triangular grid) with suitable spacing between the borehole units. For example, the borehole units may be spaced at a distance of between about 1.0 and about 2.0 m, more preferably about 1.5 m. The borehole units preferably have a length of between about 1.0 and about 2.5 m, more preferably about 1.5 m, and are adapted to be received in boreholes having a similar depth. In an arrangement where the heat exchange assembly is installed in a thermal ground mass that is substantially bounded or contained by building foundations then the borehole units will typically extend into the ground by a distance that is substantially the same as, or at least does not substantially exceed, the depth of the building foundations. It will be readily appreciated that the borehole units can be received in boreholes that are much shallower, and which are spaced much closer together, than the boreholes used for conventional ground source heat pumps (GSHPs) because there is no need to allow for temperature recovery for the reasons discussed in more detail below.

Boreholes of the required depth can be drilled using standard post hole drilling equipment, for example, rather than specialist deep hole boring rigs.

The open-loop heat transfer pipes of each borehole unit can be substantially U-shaped. More particularly, each open-loop heat transfer pipe can include a first length (supply) of polyethylene (PE) piping and a second length (return) of PE piping connected together by a short length of PE piping or a u-joint so that their centre lines are substantially parallel and spaced about 100 mm apart. The lengths of PE piping can be connected to the connecting pipes by elbow joints. All connections can be electro-welded or the like and the finished heat exchange assembly is preferably checked and pressure-tested in the factory before it is transported to the installation site.

The heat exchange assembly can also be supported by a substantially rigid support structure (e.g. a jig) during transportation and installation.

The present invention further provides a thermal energy store comprising: an array of boreholes in a thermal ground mass; and a heat exchange assembly as described above arranged with each borehole unit received in a respective one of the boreholes. The substantially rigid support structure is removed once the heat exchange assembly is properly positioned with each borehole unit received in a respective one of the boreholes. The thermal ground mass will typically be soil or earth that defines a thermal mass which is capable of storing and retaining heat energy. The soil or earth can be optionally compacted before the boreholes are drilled and the heat exchange assembly is installed. This allows for the array of boreholes to be drilled with little disturbance to the ground between the building foundations.

The thermal energy store can include more than one heat exchange assembly. In this case, the inlets and outlets of the heat exchange assemblies can be connected to common inlet and outlet manifolds or connecting blocks by suitable connection pipes. The heat exchange assemblies can be connected together in series to form a single open-loop circuit, in parallel to form a plurality of open-loop circuits, or a combination thereof.

The boreholes can be substantially filled by a filler material, e.g. sand or a thermally-enhanced grout.

A layer of filler material (e.g. sand) can cover the connecting pipes of the heat exchange assembly. A layer of thermal insulating material (e.g. polystyrene or polyurethane foam blocks) can be on top of the layer of filler material.

It is believed that heat transfer between the thermal ground mass and fluid circulating through the heat exchange assembly will be improved if the thermal ground mass is kept slightly moist. A damp proof membrane can therefore be positioned on top of the layer of thermal insulating material. Additional means may be provided to control moisture levels of the thermal ground mass, particularly during the summer months.

The thermal ground mass can be substantially bounded or contained by building foundations. In other words, the thermal energy store can be conveniently installed directly underneath the building during construction. However, in the case where the thermal energy store is to be installed to an existing building (i.e. retro-fitted), then the thermal energy store will normally be located outside the building foundations. A layer of thermal insulating material (e.g. polystyrene or polyurethane foam blocks) can be positioned between the building foundations and the thermal ground mass to provide additional insulation along the sides of the thermal ground mass.

A hydronic radiant heating or cooling system arranged to heat or cool a building space can include a thermal energy store as described above. The hydronic radiant heating or cooling system can be an under floor heating system, for example, where heated or cooled fluid is circulated around a tubing loop that is typically laid in a serpentine pattern and clipped to an underlying layer of insulation. A concrete screed is then laid on top of the insulation and the tubing. The tubing can also be installed in timber suspended floors, or in walls or ceilings. The hydronic radiant heating or cooling system can be installed in a building, and in particular a building that aims to meet the 'zero carbon' standard.

The present invention further provides a method of operating the hydronic radiant heating or cooling system comprising the steps of: circulating fluid through the open-loop fluid circuit of the heat exchange assembly to store thermal energy in the thermal ground mass; circulating fluid through the open-loop fluid circuit of the heat exchange assembly to extract thermal energy from the thermal ground mass; and using the extracted thermal energy to provide space heating or cooling. For example, heated or cooled fluid can be circulated through the heat exchange assembly to raise or lower the temperature of the thermal ground mass and store heat energy. Fluid can then be circulated through the heat exchange assembly where it can be heated or cooled by the thermal ground mass (i.e. the thermal ground mass is operating as a heating or cooling device in heat exchange with the heat transfer pipes of the borehole units) and the heated or cooled fluid can be used to provide radiant space heating or cooling.

Any suitable heating or cooling device can be used to heat or cool the fluid before it is circulated through the heat exchange assembly to raise or lower the temperature of the thermal ground mass. One suitable example would be a photovoltaic thermal (PV/T) hybrid array in which heat energy is removed from the conventional photovoltaic (PV) cells by fluid cooling to enable them to operate at more efficient temperatures while also capturing heat energy in a similar manner to conventional solar thermal panels. Conventional solar thermal panels can also be used. If a GSHP is available then fluid can be circulated between the heat exchange assembly and the heat pump so that low grade heat which is not sufficient for radiant space heating can be extracted from the thermal energy store.

A pump can be used to circulate fluid through the heat exchange assembly.

In general terms, the present invention further provides a method of operating a thermal energy store as described above comprising the steps of: connecting the inlet and outlet of the heat exchange assembly to (a) a source of heated or cooled fluid, or (b) one of a hydronic radiant heating or cooling system and a heat pump to form a closed-loop circuit; and circulating fluid around the closed-loop circuit.

The present invention further provides a method of assembling a heat exchange assembly comprising the steps of: forming a plurality of borehole units, each borehole unit including an open-loop heat transfer pipe having an inlet and an outlet; arranging an array of the borehole units on a substantially rigid support structure (e.g. a jig) in a pre-determined pattern prior to installation of the heat exchange assembly with each borehole unit extending substantially perpendicular to a plane of the heat exchange assembly; and prior to installation of the heat exchange assembly connecting the inlet of each borehole unit apart from a first borehole unit in the array to the outlet of a preceding borehole unit in the array by a connecting pipe that lies substantially in the plane of the heat exchange assembly to define an open-loop fluid circuit including each open-loop heat transfer pipe and extending between an inlet and an outlet of the assembled heat exchange assembly.

The method of assembling the heat exchange assembly can include the step of pressure-testing the assembled heat exchange assembly prior to its installation.

The present invention further provides a method of forming a thermal energy store comprising the steps of: drilling an array of boreholes in a thermal ground mass (e.g. soil or earth, optionally compacted) in a pre-determined pattern; and installing a heat exchange assembly as described above with an array of borehole units arranged in the same pre-determined pattern, each borehole unit being received in a respective one of the boreholes. The method can further include the preliminary step of using a template to mark out the position of the boreholes in the pre-determined pattern before the boreholes are drilled.

The heat exchange assembly can be transported and installed while the borehole units are arranged on a substantially rigid support (e.g. a jig) which is removed once the heat exchange assembly is properly positioned with each borehole unit received in a respective one of the boreholes. Once installed, the inlet and outlet of the heat exchange assembly are connected to inlet and outlet manifolds or to any suitable connectors that allow fluid to be circulated through the borehole units.

### Drawings

Fig. 1 is a top view showing a thermal energy store according to the present invention;
Fig. 2 is a cross section along line A-A of Fig. 1; and
Fig. 3 is a cross section showing a detail of the thermal energy store of Fig. 1, and in particular a borehole unit of a heat exchange unit.

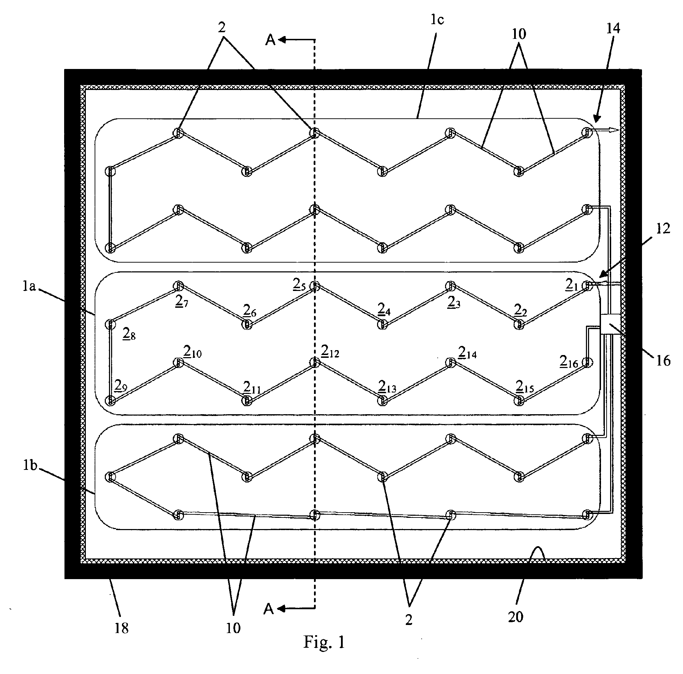

With reference to Fig. 1 a thermal energy store according to the present invention includes three separate, integrally-formed, heat exchange assemblies 1a, 1b and 1c. The first and third heat exchange assemblies 1a, 1c are identical while the second heat exchange assembly 1b has a narrower width. They all have the same basic construction. It will be readily appreciated that any number of heat exchange assemblies can be used depending on the available area, and that the heat exchange assemblies can have any suitable number of individual borehole units (see below) arranged in any suitable pre-determined pattern.

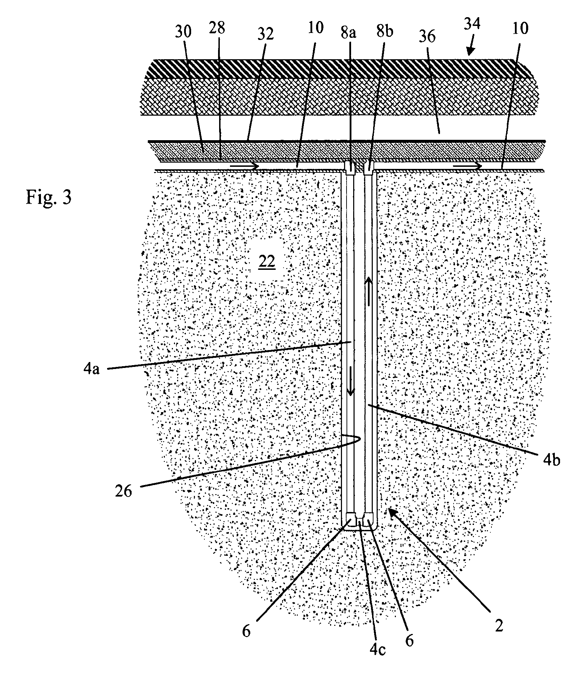

With reference to Figs. 1 to 3, each heat exchange assembly consists of an array of borehole units 2 that extend vertically into boreholes 26. Each borehole unit 2 includes a supply pipe 4a and a return pipe 4b formed from 1.5 m lengths of 40 mm polyethylene (PE) piping. The supply pipe 4a and return pipe 4b are connected together at one end by a short length of 40 mm PE piping 4c and elbow joints 6 such that their centre lines are about 100 mm apart. Elbow joints 8a, 8b are used to connect the other ends of the supply pipe 4a and return pipe 4b to connecting pipes 10 formed from 1.5 m lengths of 40 mm PE piping that extend horizontally. The elbow joint 8a defines an inlet for each individual borehole unit 2 and the elbow joint 8b defines an outlet. Any suitable process can be used to connect the elbows to the PE piping, e.g. electro-welding.

The borehole units 2 can be formed as sub-assemblies and are then mounted to a jig in a pre-determined pattern. In the case of the first and third heat exchange assemblies 1a and 1c, the borehole units 2 are arranged in a triangular grid at a spacing of 1.5 m to form a 2 x 8 array of staggered boreholes. In the case of the second, narrower, heat exchange assembly 1b, the borehole units 2 are arranged in a triangular grid to form a 1 x 8 array of staggered boreholes units and a 1 x 4 array of aligned boreholes units. This variation of matrix patterns enables a wide variety of building shaped to be covered.

The borehole units 2 of each heat exchange unit 1a, 1b and 1c are connected together by the connecting pipes 10 to form a continuous, open-loop, fluid circuit. In the case of the first heat exchange unit 1a, the outlet of a first borehole unit 2₁ is connected to the inlet of a second borehole unit 2₂, the outlet of the second borehole unit 2₂ is connected to the inlet of a third borehole unit 2₃, the outlet of the third borehole unit 2₃ is connected to the inlet of a fourth borehole unit 2₄, and so on. The first borehole unit 2₁ defines an inlet for the first heat exchange assembly 1a and the sixteenth (or last) borehole unit 2₁₆ defines an outlet for the first heat exchange assembly. The borehole units of the second and third heat exchange assemblies 1b and 1c are connected together in a similar manner.

The open-loop fluid circuits defined by each heat exchange unit 1a, 1b and 1c can be arranged in series or parallel. In the case of a parallel arrangement (not shown) then the inlet of each heat exchange assembly can be connected to a common inlet manifold or connecting block and the outlet of each heat exchange assembly can be common outlet manifold or connecting block. Fluid supplied to the common inlet manifold from an external fluid circuit will therefore flow through the borehole units 2 of each of the heat exchange unit 1a, 1b and 1c in parallel and will be combined again at the common outlet manifold.

Fig. 1 shows an alternative series arrangement where the inlet 12 of the first heat exchange assembly 1a is connected to an external fluid circuit (not shown), the outlet of the first heat exchange assembly is connected to the inlet of the second heat exchange assembly 1b, the outlet of the second heat exchange assembly is connected to the inlet of the third heat exchange assembly 1c, and the outlet 14 of the third heat exchange assembly is connected to the external fluid circuit. Fluid supplied to the inlet 12 of the first heat exchange assembly 1a will therefore flow through the borehole units 2 of each heat exchange assembly in turn before reaching the outlet 14 of the third heat exchange assembly 1c. The heat exchange assemblies 1a, 1b and 1c, including the individual borehole units 2 and the connecting pipes 10, are formed as integral components in the factory, where they are pressure-tested and sealed. To avoid the need to perform any machining or fixing on site, the inlets and outlets of the heat exchange assemblies 1a, 1b and 1c can be connected together using a connecting block 16, e.g. by means of a screw-fit.

The heat exchange assemblies 1a,1b and 1c are positioned underneath a building, e.g. a domestic house, and the thermal energy store is bounded by the foundations 18 for the building. It will be readily appreciated that the size and shape of the foundations will depend on the particular building, and that a building may have more than one thermal energy store bounded by different parts of the foundations.

Foundation trenches for the building are prepared in the ground as normal. Polystyrene 'clay boards' 20 are fixed to the inner faces of the trenches by pinning. The polystyrene boards 20 are intended to insulate the foundations 18 from the enclosed soil or earth 22 which forms the thermal ground mass for the thermal energy store.

Strips of thermal damp proof membrane 24 are laid on the ground and folded over the polystyrene clay boards 20 all round the periphery of the area.

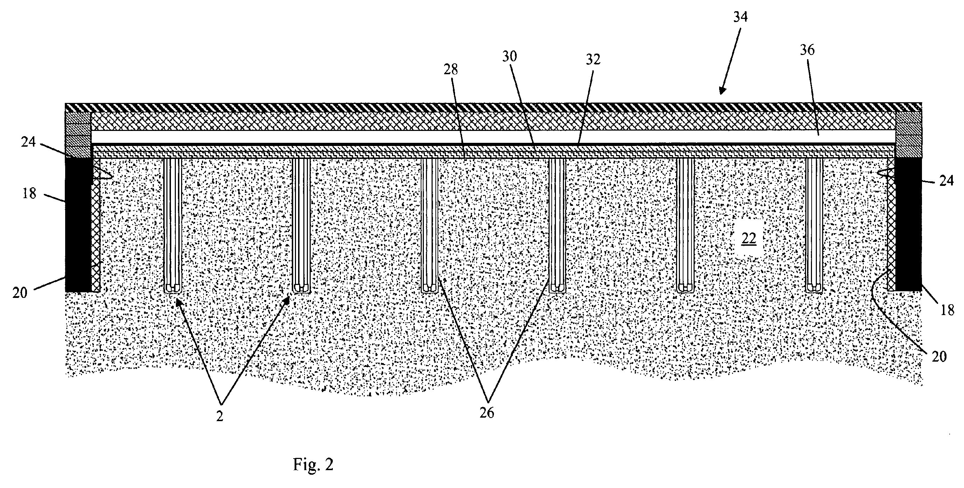

The concrete is poured to form the building foundations 18 and when set, the strips of thermal damp proof membrane 24 will be trapped between the concrete and the polystyrene boards 20 as shown in Fig. 2. The strip of damp proof membrane 24 is temporarily folded back over the foundations 18 while the heat exchange assemblies are installed and connected.

A marking template (not shown) is placed on the ground between the foundations and spray markers are applied to accurately mark the position of each borehole. The marking template is removed and the boreholes 26 are drilled, typically using a post borer with a 200 mm auger. Each borehole is drilled to a depth of about 1.5 m or to substantially the same depth as the building foundations 18. Spoil from the drilling is removed from the site as work progresses.

When the boreholes 26 have been drilled, each of the heat exchange assemblies 1a, 1b and 1c can be delivered separately and installed. The jig to which the individual borehole units 2 are mounted is lifted from the delivery vehicle by crane and gently lowered so that the borehole units 2 are lowered into the specially prepared boreholes 26. Once the connecting pipes 10 are resting on the top surface of the earth or soil, which may optionally be compacted and levelled before drilling takes place, and the borehole units 2 are received in the boreholes 26, the heat exchange assembly can be released from the jig.

When all of the heat exchange assemblies 1a, 1b and 1c are in position, they are connected to the connecting block 16 and the inlet 12 and outlet 14 are connected to the external fluid circuit. In the case of a parallel arrangement then the inlet and outlet of each heat exchange assembly will be connected to a common inlet manifold and a common outlet manifold, respectively.

The boreholes 26 are filled with sand or other suitable filler material and the whole area between the foundations 18 is covered with a layer of sand 28, typically to a depth of about 75 mm. The sand layer is raked level. The sand or filler material that is used to fill the boreholes 26 maintains a good thermal transfer between the fluid flowing through the borehole units 2 and the surrounding soil or earth 22.

The sand layer 28 is covered by insulating polyurethane foam blocks 30, each block typically being about 90 mm deep.

The insulating layer 30 is then covered by a damp proof membrane 32 with the joints taped and sealed. The strips of damp proof membrane 24 around the periphery are folded back on top of the new membrane layer 32 and taped to it.

Any thermally insulated flooring structure 34 for the building is preferably separated from the damp proof membrane 32 by an air gap 36 of about 150 mm.

The external fluid circuit and the open-loop fluid circuit defined by the borehole units 2 and the connecting pipes 10 of the heat exchange assemblies 1a, 1b and 1c together form a closed-loop heating and cooling circuit around which fluid (e.g. water or a water/glycol mix) can be circulated.

Fluid can be heated by a heat source (not shown) such as a photovoltaic thermal (PV/T) hybrid array and circulated through the heat exchange assemblies 1a, 1b and 1c to raise the temperature of the soil or earth 22. It will be readily appreciated that the soil or earth 22 that is bounded by the building foundations 18 will therefore be operating as a thermal ground mass which is capable of storing significant amounts of heat energy over time.

When the stored heat energy is needed, fluid can be circulated through the heat exchange assemblies 1a, 1b and 1c where it is heated by the surrounding soil or earth 22. The heated fluid can be used by a hydronic radiant heating system, such as an under floor heating system, to provide space heating, or passed through the heat exchanger of a conventional ground source heat pump (GSHP), for example.

It is expected that surplus heat energy from the PV/T array would be stored in the thermal energy store during the summer and then extracted during the winter. The amount of heat energy that could be stored will depend on various factors including the quantity of heat that is provided by the PV/T array and the rate of heat loss out of the thermal ground mass - which is hopefully minimised by the use of the insulating polystyrene boards 20 and the polyurethane foam insulating layer 30 and the thermal damp proof membrane 32 which retains both heat and moisture.

## Claims

1. An integrally-formed heat exchange assembly comprising:
an array of borehole units (2₁-2₁₆), each borehole unit including an open-loop heat transfer pipe (4a-4c) having an inlet (8a) and an outlet (8b) and extending substantially perpendicular to a plane of the heat exchange assembly;
wherein the inlet of a first borehole unit (2₁) in the array defines an inlet (12) of the heat exchange assembly and an outlet of a last borehole unit (2₁₆) in the array defines an outlet (14) of the heat exchange assembly; and
wherein, prior to installation of the heat exchange assembly, each borehole unit (2₂-2₁₆₎ apart from the first borehole unit (2₁) has its inlet (8a) connected to the outlet (8b) of a preceding borehole unit in the array by a connecting pipe (10) that lies substantially in the plane of the heat exchange assembly to define an open-loop fluid circuit including each open-loop heat transfer pipe (4a-4c) and extending between the inlet (12) and outlet (14) of the heat exchange assembly,
**characterized in that** the assembly further comprises a substantially rigid support structure, and **in that** the array of borehole units (2₁-2₁₆) is arranged on the substantially rigid support structure in a pre-determined pattern prior to installation of the heat exchange assembly.

2. A thermal energy store comprising:
an array of boreholes (26) in a thermal ground mass (22); and
a heat exchange assembly according to claim 1 arranged with each borehole unit (2₁-2₁₆) received in a respective one of the boreholes (26), the substantially rigid support structure being removed once the heat exchange assembly is properly positioned with each borehole unit received in a respective one of the boreholes.

3. A thermal energy store according to claim 2, further comprising a layer of filler material (28) covering the connecting pipes (10) of the heat exchange assembly.

4. A thermal energy store according to claim 3, further comprising a layer of thermal insulating material (30) on top of the layer of filler material (28).

5. A thermal energy store according to claim 4, further comprising a damp proof membrane (32) on top of the layer of thermal insulating material (30).

6. A thermal energy store according to any of claims 2 to 5, where the thermal ground mass (22) is substantially bounded by building foundations (18).

7. A thermal energy store according to claim 6, further comprising a layer of thermal insulating material (20) between the building foundations (18) and the thermal ground mass (22).

8. A hydronic radiant heating or cooling system arranged to heat or cool a building space comprising a thermal energy store according to any of claims 2 to 7.

9. A method of operating a hydronic radiant heating or cooling system according to claim 8 comprising the steps of:
circulating fluid through the open-loop fluid circuit of the heat exchange assembly to store thermal energy in the thermal ground mass (22);
circulating fluid through the open-loop fluid circuit of the heat exchange assembly to extract thermal energy from the thermal ground mass (22); and
using the extracted thermal energy to provide space heating or cooling.

10. A method of operating a thermal energy store according to any of claims 2 to 7 comprising the steps of:
connecting the inlet and outlet (12, 14) of the heat exchange assembly to (a) a source of heated or cooled fluid, or (b) one of a hydronic radiant heating or cooling system and a heat pump to form a closed-loop circuit; and
circulating fluid around the closed-loop circuit.

11. A method of assembling a heat exchange assembly comprising the steps of:
forming a plurality of borehole units (26), each borehole unit including an open-loop heat transfer pipe (4a-4c) having an inlet and an outlet (8a, 8b);
providing a substantially rigid support structure;
arranging an array of the borehole units (2₁-2₁₆) on the substantially rigid support structure in a pre-determined pattern prior to installation of the heat exchange assembly with each borehole unit extending substantially perpendicular to a plane of the heat exchange assembly; and
prior to installation of the heat exchange assembly, connecting the inlet (8a) of each borehole unit (2₂-2₁₆) apart from a first borehole unit (2₁) in the array to the outlet (8b) of a preceding borehole unit in the array by a connecting pipe (10) that lies substantially in the plane of the heat exchange assembly to define an open-loop fluid circuit including each open-loop heat transfer pipe (4a-4c) and extending between an inlet (12) and an outlet (14) of the assembled heat exchange assembly.

12. A method of assembling a heat exchange assembly according to claim 11, further comprising the step of pressure-testing the assembled heat exchange assembly prior to its installation.

13. A method of forming a thermal energy store comprising the steps of:
drilling an array of boreholes (26) in a thermal ground mass in a pre-determined pattern; and
installing an integrally-formed heat exchange assembly according to claim 1 with an array of borehole units (2₁-2₁₆₎ arranged in the same pre-determined pattern, each borehole unit (2₁-2₁₆) being received in a respective one of the boreholes (26).

14. A method of forming a thermal energy store according to claim 13, further comprising the preliminary step of using a template to mark out the position of the boreholes (26) in the pre-determined pattern.

15. A method of forming a thermal energy store according to claim 13 or claim 14, wherein the integrally-formed heat exchange assembly is transported and installed while the borehole units (2₁-2₁₆) are arranged on the substantially rigid support which is removed once the heat exchange assembly is properly positioned with each borehole unit (2₁-2₁₆) received in a respective one of the boreholes (26).

## Patentansprüche

1. Angeformte Wärmetauscheranordnung, aufweisend:
ein Raster von Bohrlocheinheiten (2₁-2₁₆), wobei jede Bohrlocheinheit ein offenes Wärmeübertragungsrohr (4a-4c) besitzt, das einen Eintritt (8a) und einen Austritt (8b) hat und im Wesentlichen senkrecht zu einer Ebene der Wärmetauscheranordnung verläuft;
wobei der Eintritt einer ersten Bohrlocheinheit (2₁) in dem Raster einen Eintritt (12) der Wärmetauscheranordnung festlegt und ein Austritt einer letzten Bohrlocheinheit (2₁₆) in dem Raster einen Austritt (14) der Wärmetauscheranordnung festlegt; und
wobei vor der Installation der Wärmetauscheranordnung jede Bohrlocheinheit (2₂-2₁₆), abgesehen von der ersten Bohrlocheinheit (2₁), über ihren Eintritt (8a) mit dem Austritt (8b) einer vorausgehenden Bohrlocheinheit in dem Raster durch ein verbindendes Rohr (10), das im Wesentlichen senkrecht in der Ebene der Wärmetauscheranordnung liegt, verbunden ist, um einen offenen Flüssigkeitskreis festzulegen, der jedes offene Wärmeübertragungsrohr (4a-4c) einbezieht und zwischen dem Eintritt (12) und dem Austritt (14) der Wärmetauscheranordnung verläuft, **dadurch gekennzeichnet, dass** die Anordnung ferner eine im Wesentlichen starre Haltekonstruktion aufweist, und dadurch, dass das Raster der Bohrlocheinheiten (2₁-2₁₆) vor der Installation der Wärmetauscheranordnung auf der im Wesentlichen starren Haltekonstruktion in einem vorgegebenen Muster angeordnet wird.

2. Wärmeenergiespeicher, aufweisend:
ein Raster von Bohrlöchern (26) in einer thermischen Grundmasse (22); und
eine Wärmetauscheranordnung nach Anspruch 1, so angeordnet, dass jede Bohrlocheinheit (2₁-2₁₆) von einem entsprechenden der Bohrlöcher (26) aufgenommen wird,
wobei die im Wesentlichen starre Haltekonstruktion entfernt wird, sobald die Wärmetauscheranordnung sich in einer ordnungsgemäßen Stellung, in der jede Bohrlocheinheit von einem entsprechenden der Bohrlöcher aufgenommen wird, befindet.

3. Wärmeenergiespeicher nach Anspruch 2, ferner eine Schicht aus Füllmaterial (28) aufweisend, die die verbindenden Rohre (10) der Wärmetauscheranordnung bedeckt.

4. Wärmeenergiespeicher nach Anspruch 3, ferner eine Schicht aus wärmedämmendem Material (30) auf der Schicht aus Füllmaterial (28) aufweisend.

5. Wärmeenergiespeicher nach Anspruch 4, ferner eine feuchtigkeitsdichte Membran (32) auf der Schicht aus wärmedämmendem Material (30) aufweisend.

6. Wärmeenergiespeicher nach einem der Ansprüche 2 bis 5, wobei die thermische Grundmasse (22) im Wesentlichen von Gebäudefundamenten (18) begrenzt wird.

7. Wärmeenergiespeicher nach Anspruch 6, ferner eine Schicht aus wärmedämmendem Material (20) zwischen den Gebäudefundamenten (18) und der thermischen Grundmasse (22) aufweisend.

8. Hydronic-Strahlungsheiz- oder -kühlsystem, das angeordnet ist, um einen Gebäuderaum, der einen Wärmeenergiespeicher nach einem der Ansprüche 2 bis 7 aufweist, zu heizen oder zu kühlen.

9. Verfahren zum Betreiben eines Hydronic-Strahlungsheiz- oder -kühlsystems nach Anspruch 8, das folgende Schritte beinhaltet:
Zirkulieren von Flüssigkeit durch den offenen Flüssigkeitskreis der Wärmetauscheranordnung, um Wärmeenergie in der thermischen Grundmasse (22) zu speichern;
Zirkulieren von Flüssigkeit durch den offenen Flüssigkeitskreis der Wärmetauscheranordnung, um Wärmeenergie aus der thermischen Grundmasse (22) zu gewinnen; und
Nutzen der gewonnenen Wärmeenergie für die Bereitstellung von Raumheizung oder Raumkühlung.

10. Verfahren zum Betreiben eines Wärmeenergiespeichers nach einem der Ansprüche 2 bis 7, das folgende Schritte beinhaltet:
Anschließen des Eintritts und des Austritts (12, 14) der Wärmetauscheranordnung an (a) eine Quelle einer erwärmten oder gekühlten Flüssigkeit oder (b) ein Hydronic-Strahlungsheiz- oder -kühlsystem oder eine Wärmepumpe zum Bilden eines geschlossenen Kreises; und
Zirkulieren der Flüssigkeit durch den geschlossenen Kreis.

11. Verfahren zum Zusammenbauen einer Wärmetauscheranordnung, das folgende Schritte beinhaltet:
Bilden einer Vielzahl von Bohrlocheinheiten (26), wobei jede Bohrlocheinheit ein offenes Wärmeübertragungsrohr (4a-4c) mit einem Eintritt und einem Austritt (8a, 8b) besitzt;
Bereitstellen einer im Wesentlichen starren Haltekonstruktion;
Anordnen eines Rasters der Bohrlocheinheiten (2₁-2₁₆) auf der im Wesentlichen starren Haltekonstruktion in einem vorgegebenen Muster vor der Installation der Wärmetauscheranordnung, wobei jede Bohrlocheinheit im Wesentlichen senkrecht zu einer Ebene der Wärmetauscheranordnung verläuft; und
vor der Installation der Wärmetauscheranordnung Verbinden des Eintritts (8a) jeder Bohrlocheinheit (2₂-2₁₆), abgesehen von einer ersten Bohrlocheinheit (2₁), in dem Raster mit dem Austritt (8b) einer vorausgehenden Bohrlocheinheit in dem Raster durch ein verbindendes Rohr (10), das im Wesentlichen senkrecht in der Ebene der Wärmetauscheranordnung liegt, um einen offenen Flüssigkeitskreis festzulegen, der jedes offene Wärmeübertragungsrohr (4a-4c) einbezieht und zwischen einem Eintritt (12) und einem Austritt (14) der zusammengebauten Wärmetauscheranordnung verläuft.

12. Verfahren zum Zusammenbauen einer Wärmetauscheranordnung nach Anspruch 11, ferner mit dem Schritt einer Druckprobe der zusammengebauten Wärmetauscheranordnung vor ihrer Installation.

13. Verfahren zum Bilden eines Wärmeenergiespeichers, das folgende Schritte beinhaltet:
Bohren eines Rasters von Bohrlöchern (26) in einer thermischen Grundmasse (22) in einem vorgegebenen Muster; und
Installieren einer angeformten Wärmetauscheranordnung nach Anspruch 1, wobei ein Raster von Bohrlocheinheiten (2₁-2₁₆) in demselben vorgegebenen Muster angeordnet ist, wobei jede Bohrlocheinheit (2₁-2₁₆) von einem entsprechenden der Bohrlöcher (26) aufgenommen wird.

14. Verfahren zum Bilden eines Wärmeenergiespeichers nach Anspruch 13, ferner mit dem vorläufigen Schritt des Verwendens einer Schablone, um die Lage der Bohrlöcher (26) in dem vorgegebenen Muster zu bezeichnen.

15. Verfahren zum Bilden eines Wärmeenergiespeichers nach Anspruch 13 oder Anspruch 14, wobei die angeformte Wärmetauscheranordnung transportiert und installiert wird, während die Bohrlocheinheiten (2₁-2₁₆) auf der im Wesentlichen starren Halterung angeordnet sind, die entfernt wird, sobald die Wärmetauscheranordnung sich in einer ordnungsgemäßen Stellung, in der jede Bohrlocheinheit (2₁-2₁₆) von einem entsprechenden der Bohrlöcher (26) aufgenommen wird, befindet.

## Revendications

1. Ensemble d'échange de chaleur formé d'un seul tenant, comprenant :
un réseau d'unités de trou de forage (2₁-2₁₆), chaque unité de trou de forage incluant un tube de transfert de chaleur en boucle ouverte (4a-4c) ayant une entrée (8a) et une sortie (8b) et s'étendant sensiblement perpendiculaire à un plan de l'ensemble d'échange de chaleur ;
dans lequel l'entrée d'une première unité de trou de forage (2₁₆) dans le réseau définit une entrée (12) de l'ensemble d'échange de chaleur et une sortie d'une dernière unité de trou de forage (2₁₆) dans le réseau définit une sortie (14) de l'ensemble d'échange de chaleur ; et
dans lequel, avant installation de l'ensemble d'échange de chaleur, chaque unité de trou de forage (2₁-2₁₆) en dehors de la première unité de trou de forage (2₁) a son entrée (8a) reliée à la sortie (8b) d'une unité de trou de forage précédente dans le réseau par un tube de liaison (10) qui repose sensiblement dans le plan de l'ensemble d'échange de chaleur pour définir un circuit de fluide en boucle ouverte incluant chaque tube de transfert de chaleur en boucle ouverte (4a-4c) et s'étendant entre l'entrée (12) et la sortie (14) de l'ensemble d'échange de chaleur,
**caractérisé en ce que** l'ensemble comprend en outre une structure de support sensiblement rigide, et **en ce que** le réseau d'unités de trou de forage (2₁-2₁₆) est agencé sur la structure de support sensiblement rigide dans un motif prédéterminé avant l'installation de l'ensemble d'échange de chaleur.

2. Réservoir de stockage d'énergie thermique comprenant :
un réseau de trous de forage (26) dans une masse de sol thermique (22) ; et
un ensemble d'échange de chaleur selon la revendication 1 agencé avec chaque unité de trou de forage (2₁-2₁₆) reçue dans l'un respectif des trous de forage (26), la structure de support sensiblement rigide étant retirée une fois que l'ensemble d'échange de chaleur est correctement positionné avec chaque unité de trou de forage reçue dans l'un respectif des trous de forage.

3. Réservoir de stockage d'énergie thermique selon la revendication 2, comprenant en outre une couche de matériau de remplissage (28) recouvrant les tubes de liaison (10) de l'ensemble d'échange de chaleur.

4. Réservoir de stockage d'énergie thermique selon la revendication 3, comprenant en outre une couche de matériau d'isolation thermique (30) au-dessus de la couche de matériau de remplissage (28).

5. Réservoir de stockage d'énergie thermique selon la revendication 4, comprenant en outre une membrane étanche à l'humidité (32) au-dessus de la couche de matériau d'isolation thermique (30).

6. Réservoir de stockage d'énergie thermique selon l'une quelconque des revendications 2 à 5, où la masse de sol thermique (22) est sensiblement délimitée par des fondations de bâtiment (18).

7. Réservoir de stockage d'énergie thermique selon la revendication 6, comprenant en outre une couche de matériau d'isolation thermique (20) entre les fondations de bâtiment (18) et la masse de sol thermique (22).

8. Système de chauffage ou de refroidissement radiant hydronique agencé pour chauffer ou refroidir un espace de bâtiment comprenant un réservoir de stockage d'énergie thermique selon l'une quelconque des revendications 2 à 7.

9. Procédé de fonctionnement d'un système de chauffage ou de refroidissement radiant hydronique selon la revendication 8, comprenant les étapes de :
faire circuler du fluide à travers le circuit de fluide en boucle ouverte de l'ensemble d'échange de chaleur pour stocker de l'énergie thermique dans la masse de sol thermique (22) ;
faire circuler du fluide à travers le circuit de fluide en boucle ouverte de l'ensemble d'échange de chaleur pour extraire de l'énergie thermique de la masse de sol thermique (22) ; et
utiliser l'énergie thermique extraite pour fournir un chauffage ou un refroidissement d'espace.

10. Procédé de fonctionnement d'un réservoir de stockage d'énergie thermique selon l'une quelconque des revendications 2 à 7, comprenant les étapes de :
relier l'entrée et la sortie (12, 14) de l'ensemble d'échange de chaleur à (a) une source de fluide chauffé ou refroidi, ou (b) l'un parmi un système de chauffage ou de refroidissement radiant hydronique et une pompe à chaleur pour former un circuit en boucle fermée ; et
faire circuler du fluide autour du circuit en boucle fermée.

11. Procédé d'assemblage d'un ensemble d'échange de chaleur comprenant les étapes de :
former une pluralité d'unités de trous de forage (26), chaque unité de trou de forage incluant un tube de transfert de chaleur en boucle ouverte (4a-4c) ayant une entrée et une sortie (8a, 8b) ;
fournir une structure de support sensiblement rigide ;
agencer un réseau des unités de trou de forage (2₁-2₁₆) sur la structure de support sensiblement rigide dans un motif prédéterminé avant l'installation de l'ensemble d'échange de chaleur avec chaque unité de trou de forage s'étendant sensiblement perpendiculaire à un plan de l'ensemble d'échange de chaleur ; et
avant l'installation de l'ensemble d'échange de chaleur, relier l'entrée (8a) de chaque unité de trou de forage (2₁-2₁₆) en dehors d'une première unité de trou de forage (2₁) dans le réseau à la sortie (8b) d'une unité de trou de forage précédente dans le réseau par un tube de liaison (10) qui repose sensiblement dans le plan de l'ensemble de l'échange de chaleur pour définir un circuit de fluide en boucle ouverte incluant chaque tube de transfert de chaleur en boucle ouverte (4a-4c) et s'étendant entre une entrée (12) et une sortie (14) de l'ensemble d'échange de chaleur assemblé.

12. Procédé d'assemblage d'un ensemble d'échange de chaleur selon la revendication 11, comprenant en outre l'étape de soumettre à essai de pression l'ensemble d'échange de chaleur assemblé avant son installation.

13. Procédé de formation d'un réservoir de stockage d'énergie thermique comprenant les étapes de :
percer un réseau de trous de forage (26) dans une masse de sol thermique dans un motif prédéterminé ; et
installer un ensemble d'échange de chaleur formé d'un seul tenant selon la revendication 1 avec un réseau d'unités de trou de forage (2₁-2₁₆) agencées dans le même motif prédéterminé, chaque unité de trou de forage (2₁-2₁₆) étant reçue dans l' un respectif des trous de forage (26).

14. Procédé de formation d'un réservoir de stockage d'énergie thermique selon la revendication 13, comprenant en outre l'étape préliminaire d'utilisation d'un gabarit pour marquer la position des trous de forage (26) dans le motif prédéterminé.

15. Procédé de formation d'un réservoir de stockage d'énergie thermique selon la revendication 13 ou la revendication 14, dans lequel l'ensemble d'échange de chaleur formé d'un seul tenant est transporté et installé alors que les unités de trou de forage (2₁-2₁₆) sont agencées sur le support sensiblement rigide qui est retiré une fois que l'ensemble d'échange de chaleur est correctement positionné avec chaque unité de trou de forage (2₁-2₁₆) reçue dans l'un respectif des trous de forage (26) .
